# EUROPÄISCHE PATENTSCHRIFT

(11) **EP 1 812 267 B1**
(45) Veröffentlichungstag und Bekanntmachung des Hinweises auf die Patenterteilung: **27.05.2009**
(21) Anmeldenummer: 05814205.0
(22) Anmeldetag: 14.11.2005
(51) Int. Cl.: B60R 21/20, B60R 21/16

(54) **MODULBAUGRUPPE FÜR EINE AIRBAGEINRICHTUNG ZUM SCHUTZ VON INSASSEN EINES KRAFTFAHRZEUGES**
MODULE AN AIRBAG DEVICE FOR THE PROTECTION OF THE OCCUPANTS OF A VEHICLE
ENSEMBLE MODULAIRE POUR UN SYSTEME DE COUSSIN GONFLABLE DE PROTECTION POUR PROTEGER LES OCCUPANTS D'UN VEHICULE AUTOMOBILE

(30) Priorität: 15.11.2004 DE 102004055657; 16.11.2004 DE 102004056128; 03.06.2005 DE 202005009002 U; 03.06.2005 DE 202005010863 U; 05.07.2005 DE 202005010864 U
(43) Veröffentlichungstag der Anmeldung: 01.08.2007
(73) Patentinhaber: Takata-Petri AG, 63743 Aschaffenburg (DE)
(72) Erfinder: ECKERT, Nick, 12587 Berlin (DE); ISERMANN, Patrick, 14197 Berlin (DE); BACHRATY, Milan, London UB6 8JU (GB); LIEBETRAU, Matthias, 14612 Falkensee (DE); SAUER, Frank, 63843 Aschaffenburg (DE)
(74) Vertreter: Baumgärtel, Gunnar
(86) Internationale Anmeldenummer: PCT/DE2005/002050
(87) Internationale Veröffentlichungsnummer: WO 2006/050719

(56) Entgegenhaltungen:
- EP-A- 0 620 139
- DE-A1- 4 419 565
- DE-A1- 10 114 208
- DE-U1- 9 101 099

## Beschreibung

Die Erfindung betrifft eine Modulbaugruppe für eine Airbageinrichtung zum Schutz von Insassen eines Kraftfahrzeugs nach dem Oberbegriff des Anspruchs 1.

Eine derartige Modulbaugruppe umfasst ein Gassackpaket, z.B. für einen Fahrer- oder Beifahrerairbag, das zum Schutz eines Fahrzeuginsassen aufblasbar ist und das durch einen umlaufenden äußeren Rand begrenzt ist. Das Gassackpaket wird gebildet durch einen in Falten gelegten Gassack, der sich beim Aufblasen entfaltet und im aufgeblasenen Zustand ein Kissen bildet, mit dem in einem Crash-Fall der zu schützende Insasse vor Verletzungen geschützt werden soll, und der im gefalteten Zustand als Gassackpaket in einer flexiblen Schutzhülle angeordnet ist, die das Gassackpaket gasdicht umgibt (verschließt). Dies ermöglicht eine Minimierung des Packmaßes des Gassackpaketes durch Erzeugung eines Unterdruckes in der (abschließend gasdicht zu verschließenden) flexiblen Schutzhülle, vergl. DE 101 14 208 A1 und DE 10 2004 056 128. Weiterhin umfasst die Modulbaugruppe einen Träger, an dem der Gassack festgelegt ist, sodass das Gassackpaket eine definierte Position innerhalb eines jeweiligen Kraftfahrzeugs einnimmt.

Die vorliegende Erfindung befasst sich also insbesondere speziell mit Besonderheiten, die beim Umschließen eines gefalteten Gassackpaketes mit einer flexiblen Hülle (Folie) auftreten, die ein mittels Unterdruck auf minimale Packmaße reduziertes Gassackpaket zur Erhaltung des Unterdruck gasdicht umschließt, wobei vor allem die Möglichkeit der Erzeugung und Aufrechterhaltung eines Unterdruckes während und nach der Herstellung des von der Hülle gasdicht umschlossenen Gassackpaktes zu beachten ist.

In der DE 91 01 099 U1 ist eine Modulbaugruppe für ein Kraftfahrzeug beschrieben, bei der ein zu einem Paket zusammengefalteter Airbag von einer Schutzhülle umgeben ist, in der ein Vakuum anlegbar ist, und bei der der Airbag zusammen mit der Schutzhülle über Montagebolzen an einem Montageflansch eines Gasgenerators festlegbar ist, indem die vom Generatorflansch abstehenden Montagebolzen Befestigungsöffnungen sowohl in dem Airbag als auch in der Schutzhülle durchgreifen.

Aus der EP 0 620 139 A1 ist eine Modulgruppe für ein Kraftfahrzeug bekannt, bei der ein Gassackpaket topfförmig von einer Schutzabdeckung übergriffen wird, wobei das Gassackpaket einerseits zusammen mit einem Diffusor klemmend an einem Modulträger befestigt ist und die Schutzabdeckung separat hiervon über ein Befestigungsband und beabstandet von dem Gassack an jenem Modulträger festgelegt ist.

Der Erfindung liegt das Problem zugrunde, eine Modulbaugruppe der eingangs genannten Art hinsichtlich der Festlegung des Gassackpaketes an dem hierfür vorgesehenen Träger, unter Berücksichtigung der Anordnung des Gassackpaketes in einer gasdichten Schutzhülle, zu verbessern.

Dieses Problem wird erfindungsgemäß durch die Schaffung einer Modulbaugruppe mit den Merkmalen des Anspruchs 1 gelöst.

Danach erstreckt sich zumindest entlang eines Teiles des äußeren Randes des Gassackpaketes ein Halteelement, das zur Festlegung des Gassackpaketes von am Träger vorgesehenen Befestigungsmitteln übergriffen, insbesondere umgriffen wird, sodass das Gassackpaket über das Halteelement und die trägerseitigen Befestigungsmittel am Träger festgelegt ist. Die - außerhalb des Gassackpaketes und auch außerhalb der das Gassackpaket umschließenden Schutzhülle liegenden - Befestigungsmittel sind dabei entweder einstückig am Träger angeformt und federnd gegenüber einem seitlichen Abschnitt des Trägers schwenkbar oder die Befestigungsmittel sind als separate Baugruppe am Träger fixiert.

Dies ermöglicht in einfacher Weise eine Festlegung des Gassackpaketes am Träger, indem das gassackseitige Halteelement mit den trägerseitigen Befestigungsmitteln in Eingriff gebracht wird. Das Halteelement ist dabei zusammen mit dem Gassackpaket in der (bevorzugt durch eine Folie gebildeten) Schutzhülle angeordnet, die das Gassackpaket bei minimalem Packmaß gasdicht zusammenhält.

Das Halteelement ist hierzu in geeigneter Weise mit dem Gassackpaket verbunden, z. B. indem es in einer Schlaufe des Gassackpaketes angeordnet ist. Hierbei handelt es sich bevorzugt um eine geschlossene Schlaufe, die das Halteelement entlang einer im Querschnitt vollständig geschlossenen, ringartigen Kurve umgreift und die beispielsweise dadurch gebildet sein kann, dass zwei Gassackabschnitte miteinander verbunden sind. Zur Verbindung der beiden Gassackabschnitte eignen sich z.B. Vernähen, Verweben oder Kleben.

Das Halteelement kann in einfacher Weise durch einen Haltering gebildet sein, der ringförmig am äußeren Rand des Gassackpaketes umläuft und bei dem es sich einerseits um einen vollständig geschlossenen Ring oder andererseits um einen an einer oder mehreren Stellen unterbrochenen Ring handeln kann, um die Montage durch Einfädeln in zugeordnete Befestigungsmittel zu erleichtern. Alternativ zur Ausbildung des Halteelementes als Haltering kann dieses beispielsweise auch durch eine Halteplatte gebildet werden.

Als Material für das Halteelement kommen insbesondere Metall (Blech) oder Kunststoff in Frage.

In einer bevorzugten Ausführungsform der Erfindung steht das Halteelement derart unter elastischer Vorspannung, dass es die Tendenz hat, in die zugeordneten Befestigungsmittel am Träger einzugreifen.

Die Befestigungsmittel sind bevorzugt derart ausgebildet, dass sie das gassackseitige Halteelement umgreifen, ggf. zusammen mit dem Träger der Modulbaugruppe.

Zur Fixierung separater Befestigungsmittel am Träger eignen sich beispielsweise Befestigungsbolzen zur Bildung einer Schraub- oder Nietverbindung, Klemmelemente zur Bildung einer Klemmverbindung oder eine Materialumstellung (Umbördelung) am Träger.

Bei der separaten, die Befestigungsmittel bildenden Baugruppe kann es sich beispielsweise um Befestigungshaken handeln oder um mindestens ein am Träger angeordnetes Gehäuseteil, an dem entsprechende Befestigungsmittel einstückig angeformt sind.

Weiterhin kann als Befestigungsmittel eine Klemmeinrichtung vorgesehen sein, die mittels einer Klammer das Halteelement gegen den Träger verspannt und dadurch gleichzeitig am Träger fixiert ist.

Weiterhin können die Befestigungsmittel durch Rastmittel am Träger fixiert sein, und zwar vorzugsweise an mindestens zwei voneinander beabstandeten Raststellen, um eine maximale Stabilität und Sicherheit der Rastverbindung zu gewährleisten.

Im Fall einstückig am Träger angeformter Befestigungsmittel sind diese besonders bevorzugt als Clipselemente oder Rastvorsprünge ausgebildet.

Insgesamt können die Befestigungsmittel sowohl zum formschlüssigen als auch zum kraftschlüssigen Halten des Halteelementes ausgebildet sein, wobei auch eine Kombination dieser beiden Verbindungstypen möglich ist.

Um zu verhindern, dass der Randabschnitt des Gassackes und/oder der jenen Randabschnitt des Gassackes überdeckende Abschnitt der Schutzhülle, die zwischen dem Halteelement und den zugeordneten Befestigungsmitteln aufgenommen sind und von letzteren übergriffen werden, beschädigt werden könnten, kann eine Abdeckung vorgesehen sein, die zwischen dem Halteelement und den zugeordneten Befestigungsmitteln liegt, und zwar insbesondere zwischen dem Gassackpaket (einschließlich der flexiblen Schutzhülle) einerseits und den Befestigungsmitteln andererseits. Als Abdeckung eignet sich beispielsweise ein Schrumpfschlauch.

Gemäß einer Ausführungsform sind am Träger entlang des äußeren Umfanges des Gassackpaketes eine Mehrzahl einzelner Befestigungsmittel hintereinander (und dabei voneinander beabstandet) angeordnet. Es ist jedoch auch denkbar, dass die Befestigungsmittel am Träger entlang des äußeren Randes des Gassackpaketes geschlossen umlaufen.

Bei dem Träger kann es sich einerseits um einen (üblicherweise aus Metall bestehenden) Generatorträger handeln. Der Träger kann jedoch auch Bestandteil eines (aus Metall oder Kunststoff bestehenden) Gehäuses zur Aufnahme des Gassackpaketes sein, wobei ein Abschnitt dieses Gehäuses zugleich eine Doppelfunktion als Generatorträger übernehmen kann.

Weitere Einzelheiten und Vorteile der Erfindung werden bei der nachfolgenden Beschreibung von Ausführungsbeispielen anhand der Figuren deutlich werden.

Es zeigen:
- Fig. 1: einen Querschnitt durch eine Modulbaugruppe für eine Airbageinrichtung eines Kraftfahrzeugs mit einem in einer Schutzhülle angeordneten Gassackpaket, das entlang seines äußeren Randes an einem Träger der Modulbaugruppe festgelegt ist;
- Fig. 2: eine erste Abwandlung des Ausführungsbeispieles aus Fig. 1;
- Fig. 3: eine zweite Abwandlung des Ausführungsbeispieles aus Fig. 1;
- Fig. 4: eine dritte Abwandlung des Ausführungsbeispieles aus Fig. 1;
- Fig. 5a: eine vierte Abwandlung des Ausführungsbeispieles aus Fig. 1;
- Fig. 5b: eine Draufsicht auf einen Ausschnitt der Anordnung aus Fig. 5a;
- Fig. 6: eine fünfte Abwandlung des Ausführungsbeispieles aus Fig. 1;
- Fig. 7: eine sechste Abwandlung des Ausführungsbeispieles aus Fig. 1;
- Fig. 8: eine siebte Abwandlung des Ausführungsbeispieles aus Fig. 1.
- Fig. 9: eine Weiterbildung des Ausführungsbeispieles aus Fig. 3;
- Fig. 10: eine ausschnitthafte Darstellung einer weiteren Variante zur Festlegung des Gassackpaketes entlang seines äußeren Randes an einem Träger der Modulbaugruppe.

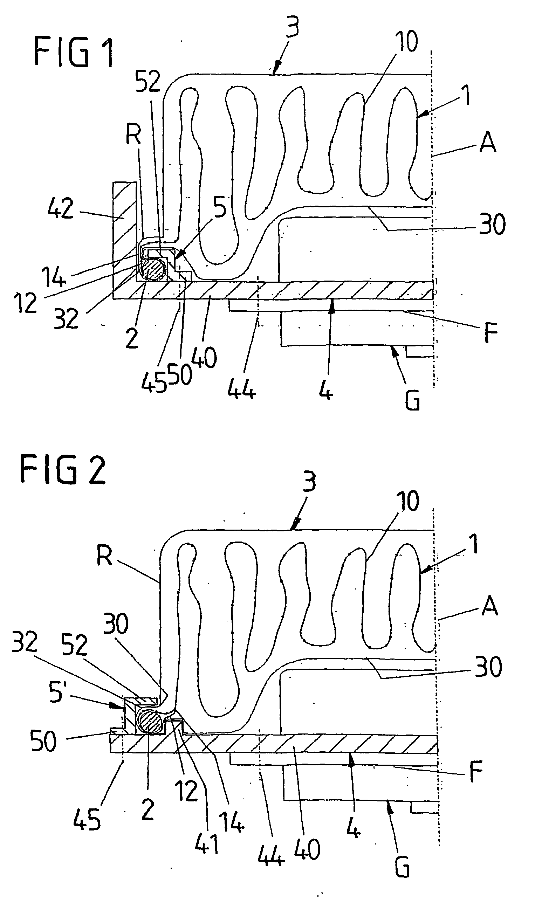

In Fig. 1 ist in einem Querschnitt eine Modulbaugruppe für eine Airbageinrichtung (nämlich hier beispielhaft ein bezüglich einer Achse A achsensymmetrisches Fahrerairbagmodul zum Einbau in ein Lenkrad) eines Kraftfahrzeugs dargestellt, die einen gefalteten Gassack umfasst, dessen in Falten 10 gelegte Gassackhülle ein Gassackpaket 1 bildet. Das Gassackpaket ist in einer durch eine Folie 30 gebildeten, gasdicht verschlossenen Schutzhülle 3 verstaut, die eine Expansion des zuvor mittels Unterdruck komprimierten Gassackpaketes 1 so lange verhindert, wie dieses nicht zum Schutz eines Fahrzeuginsassen mittels eines Gasgenerators G aufgeblasen wird. Unter der Einwirkung des sich beim Aufblasen entfaltenden Gassackpaketes zerbirst die durch eine Folie 30 gebildete Hülle 3, so dass sich das Gassackpaket 1 entfalten kann.

Ein zum Aufblasen des Gassackpaketes 1 dienender Gasgenerator G (Topfgasgenerator) ist über einen Generatorflansch F in bekannter Weise durch geeignete Verbindungsmittel 44, z.B. in Form von Schrauben oder Nieten, an dem scheibenförmigen Grundkörper 40 eines Trägers 4 der Modulbaugruppe befestigt, der somit als Generatorträger dient und der am äußeren Umfang einen (im Wesentlichen senkrecht) abgewinkelten seitlichen Endabschnitt 42 aufweist, der das Gassackpaket 1 ringförmig umgreift. Neben Schrauben oder Nieten können auch andere Elemente als Verbindungsmittel 44 zur Befestigung des Gasgenerators G über den Generatorflansch F an dem Träger 4 verwendet werden, wie etwa ein Bajonettverschluss, dessen Komponenten einerseits am Generatorflansch F und andererseits am Träger 4 angeordnet, insbesondere angeformt sind. Dies eröffnet die Möglichkeit einer unmittelbaren Integration der Verbindungsmittel in die aneinander zu befestigenden Bauteile F, G, 4, so dass separate, zusätzliche Verbindungsmittel gar nicht benötigt werden.

Das Gassackpaket 1 ist ebenfalls an dem Träger 4 befestigt und weist hierzu einen entlang seines äußeren Randes R umlaufenden Haltering 2 als Halteelement auf, der innerhalb der folienartigen Schutzhülle 3 in einer ringförmig geschlossenen Schlaufe 12 am äußeren Rand R des Gassackpaketes 1 liegt. Die von einem Abschnitt 32 der Schutzhülle 3 umgebene Schlaufe 12 am äußeren Rand R des Gassackpaketes 1 ist gebildet, indem zwei Gassackabschnitte unter Erzeugung jener Schlaufe 12 an einer Verbindungsstelle 14 in geeigneter Weise, z.B. durch Nähen, Verweben oder Kleben, fest miteinander verbunden sind.

Der Haltering 2 läuft in der Schlaufe 12 ringartig am äußeren Rand R des Gassackpaketes 1 um, so dass er das Gassackpaket 1 ringartig vollständig umfasst.

Dem Haltering 2 sind am Träger 4 Befestigungsmittel 5 zugeordnet, die durch eine Mehrzahl entlang des äußeren Umfangs des Trägers 4 hintereinander angeordneter Befestigungshaken gebildet werden. Diese liegen vollständig sowohl außerhalb des Gassackpaketes 1 als auch außerhalb der das Gassackpaket 1 umschließenden Schutzhülle 3. Hierdurch können die hakenartigen Befestigungselemente mit ihrer jeweiligen, entlang des Trägers 4 erstreckten Basis 50 in einfacher Weise durch Befestigungsbolzen, z.B. zur Herstellung einer Schraub- oder Nietverbindung, am Träger 4 festgelegt werden. Die Gefahr einer Beschädigung der Schutzhülle 3 besteht nicht, da die Befestigungsmittel 5 vollständig außerhalb der Schutzhülle 3 liegen.

Die Befestigungsmittel 5 übergreifen mit einem hakenförmigen Befestigungsabschnitt 52 den Haltering 2 zusammen mit der Schlaufe 12 des Gassackpaketes 1 sowie dem die Schlaufe 12 umgebenden Hüllenabschnitt 32. Zusammen mit dem Träger 4, nämlich dessen scheibenförmigen Grundkörper 40 und dessen hiervon abgewinkeltem Endabschnitt 42, umgreifen die Befestigungsmittel 5 den Haltering 2 vollständig, so dass das Gassackpaket 1 hierüber am Träger 4 festgelegt ist.

Die Montage des Gassackpaketes 1 am Träger 4 kann dabei in einfacher Weise dadurch erfolgen, dass das Gassackpaket 1 zusammen mit dem in der Schlaufe 12 am äußeren Rand R des Gassackpaketes 1 angeordneten Haltering 2 sowie der das Gassackpaket 1 und den Haltering 2 umgebenden, gasdicht verschlossenen Schutzhülle 3 auf den Träger 4 aufgesetzt wird, wobei der abgewinkelte seitliche Endabschnitt 42 des Trägers 4 das Gassackpaket 1 umfasst. Anschließend werden die Befestigungsmittel 5 in Form hakenartiger Befestigungselemente über geeignete Verbindungsmittel 45, z.B. in Form von Nieten oder Schrauben, in einer Position am Träger 4 festgelegt, in der sie mit ihrem jeweiligen hakenförmigen Befestigungsabschnitt 52 den Haltering übergreifen.

In den Figuren 2 bis 8 sind mehrere Abwandlungen der in Figur 1 gezeigten Modulbaugruppe dargestellt, wobei sich die Abwandlungen vorwiegend auf die Art der Festlegung des Halteringes 2 am Träger 4 beziehen. Im Übrigen stimmt die in den Figuren 2 bis 8 dargestellte Modulbaugruppe jeweils mit der anhand Figur 1 gezeigten überein, so dass nachfolgend jeweils insbesondere auf die jeweilige Art der Festlegung des Gassackpaketes 1 über den Haltering 2 am Träger 4 eingegangen wird.

Bei dem in Figur 2 gezeigten Ausführungsbeispiel einer Modulbaugruppe weist der Träger 4 am äußeren Rand keinen abgewinkelten seitlichen Abschnitt 42 auf. Stattdessen bilden die am äußeren Rand des scheibenförmigen Grundkörpers 40 des Trägers 4 angeordneten Befestigungsmittel 5' in Form hakenförmiger Befestigungselemente eine das Gassackpaket 1 radial nach außen hin begrenzende Baugruppe. Im Unterschied zu dem Ausführungsbeispiel gemäß Figur 1 liegen hier also die Befestigungsmittel 5 - in radialer Richtung betrachtet - nicht innerhalb sondern außerhalb des Halteringes 2. Auch hier übergreifen die durch hakenartige Befestigungselemente gebildeten Befestigungsmittel 5' mit einem jeweiligen hakenförmigen Befestigungsabschnitt 52 den am äußeren Umfang des Gassackpaketes 1 in einer Schlaufe 12 umlaufenden Haltering 2, wodurch das Gassackpaket 1 am Träger 4 festgelegt ist. Der Haltering 2 ist dabei ggf. elastisch nach außen vorgespannt, so dass er kraftschlüssig gegen die Befestigungsmittel 5' drückt.

Auf der dem Befestigungsmittel 5' in radialer Richtung abgewandten Seite ist neben dem Haltering 2 eine (einstückig angeformte oder als separates Element befestigte) Erhebung 41 des Trägers 4 vorgesehen, mit der verhindert werden soll, dass unter der Wirkung der beim Aufblasen und Entfalten des Gassackpaketes 1 auftretenden Zugkräfte der Haltering 2 in radialer Richtung nach Innen außer Eingriff mit den Befestigungsmitteln 5' gebracht wird.

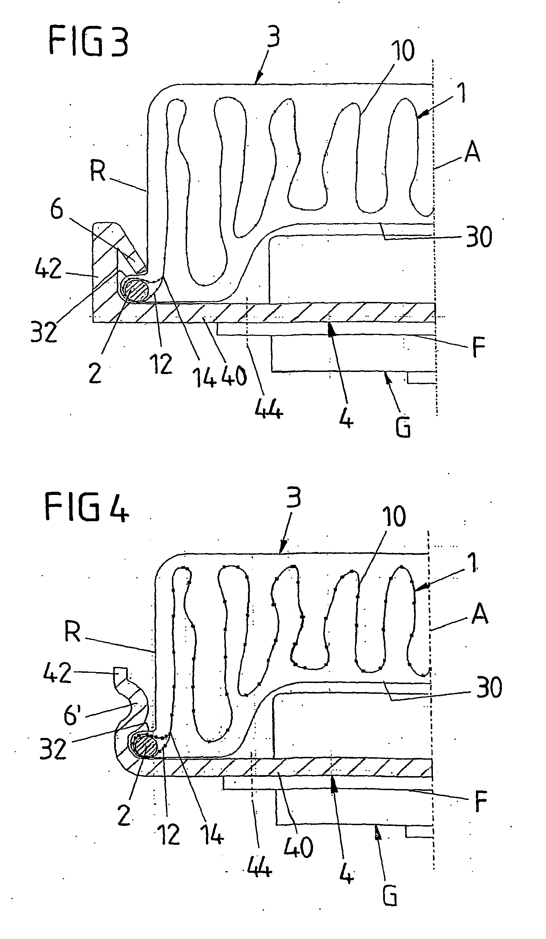

Bei dem in Figur 3 gezeigten Ausführungsbeispiel einer Modulbaugruppe ist an dem am äußeren Umfang des Grundkörpers 40 des Trägers 4 abgewinkelten, ringförmig entlang des äußeren Randes R des Gassackpaketes 1 umlaufenden seitlichen Abschnitt 42 mindestens ein Clipselement 6 angeformt, das den am äußeren Rand R des Gassackpaketes 1 umlaufenden Haltering 2 übergreift und hierdurch kraft- und formschlüssig hält. Das Clipselement 6 ist dabei derart federnd ausgebildet, insbesondere federnd gegenüber dem seitlichen Abschnitt 42 schwenkbar, dass es bei der Montage des Halteringes 2 durch Aufsetzen des Gassackpaketes 1 und Montageringes 2 auf den Grundkörper 40 des Trägers 4 radial ausweichen kann. Nach dem Aufsetzen des Halteringes 2 auf den Träger 4 schnappt das Clipselement 6 dann zurück in die in Figur 3 gezeigte Position, in der es den Haltering 2 übergreift.

Bei dem in Figur 4 gezeigten Ausführungsbeispiel ist in Abwandlung der Figur 3 am abgewinkelten seitlichen Abschnitt 42 des Trägers 4 ein Vorsprung 6' angeformt, der den Haltering 2 formschlüssig übergreift. Der Vorsprung 6' kann dabei einerseits kontinuierlich umlaufend an dem abgewinkelten seitlichen Abschnitt 42 angeordnet sein oder durch eine Mehrzahl in Umfangsrichtung hintereinander angeordneter, voneinander beabstandeter Vorsprungsbereiche gebildet werden. Der Vorsprung wird bevorzugt erst nach dem Aufsetzen des Gassackpaketes 1 zusammen mit dem Haltering 2 auf den Träger 4 und dem Positionieren des Gassackpaketes 1 und des Halteringes 2 am seitlichen Abschnitt 42 derart angeformt, dass er den Haltering 2 formschlüssig übergreift. Alternativ kann der Vorsprung 6' jedoch auch bereits im Vorraus am seitlichen Abschnitt 42 des Trägers 4 angeformt sein; in diesem Fall ist er derart elastisch auszubilden, dass er ein Aufsetzen des Gassackpaketes 1 zusammen mit dem Haltering 2 auf den Träger 4 unter elastischer Deformation in radialer Richtung nach außen gestattet.

Sowohl im Fall der Figur 3 als auch im Fall der Figur 4 ist es vorteilhaft, wenn der Haltering 2 nach außen, in Richtung auf den abgewinkelten seitlichen Abschnitt 42 des Trägers 4 vorgespannt ist, wodurch die Haltewirkung der jeweiligen Befestigungsmittel 6 bzw. 6' unterstützt wird.

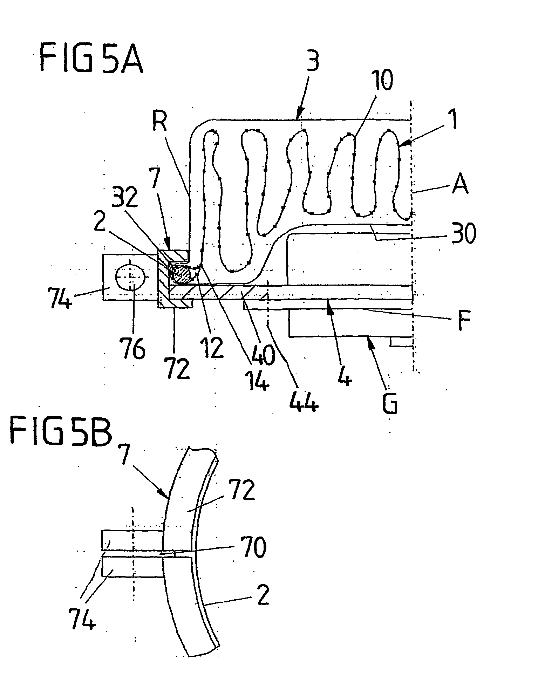

In den Figuren 5a und 5b ist schließlich ein Ausführungsbeispiel einer Modulbaugruppe gezeigt, bei dem zur Festlegung des Gassackpaketes 1 am Träger 4 am äußeren Umfang des Grundkörpers 40 des Trägers 4 als Befestigungsmittel 7 in Form einer Klemmeinrichtung eine mit einem Schlitz 70 versehene (ringförmig umlaufende) Klammer 72 angeordnet ist, die den äußeren Rand des Grundkörpers 40 des Trägers 4 sowie den Haltering 2 zusammen mit der am Gassackpaket 1 gebildeten Schlaufe 12 und dem entsprechenden Abschnitt 32 der Schutzhülle 3 gegeneinander verklemmt und hierdurch das Gassackpaket 1 am Träger 4 festlegt.

Die Klemmeinrichtung 7 wird in einfacher Weise nach dem Positionieren des Gassackpaketes 1 aufgespreizt und auf den Träger 4 geschoben, so dass sie den äußeren Umfang des Trägers 4 sowie den Haltering 2 des Gassackpaketes 1 umgreift. Die Klemmwirkung wird sodann in bekannter Weise hergestellt, indem in eine Durchgangsöffnung 76 abgewinkelter Betätigungsabschnitte 74 der Klemmeinrichtung 7 eine Klemmschraube eingeführt und mittels einer zugeordneten Mutter so angezogen wird, dass sich der Schlitz 70 verengt und hierdurch die Klammer 72 den Haltering 2 am Träger 4 gegeneinander festlegt.

Alternativ zur Verwendung einer Klemmeinrichtung 7, die durch eine einzelne entlang des gesamten Umfanges des Halteringes 2 und des Trägers 4 ringartig umlaufende Klammer gebildet wird, kann die Klemmeinrichtung 7 auch aus mehreren, in Umfangsrichtung des Halteringes 2 voneinander beabstandeten Klammern bestehen, die jeweils einen Teilabschnitt des Halteringes 2 am Träger 4 festlegen.

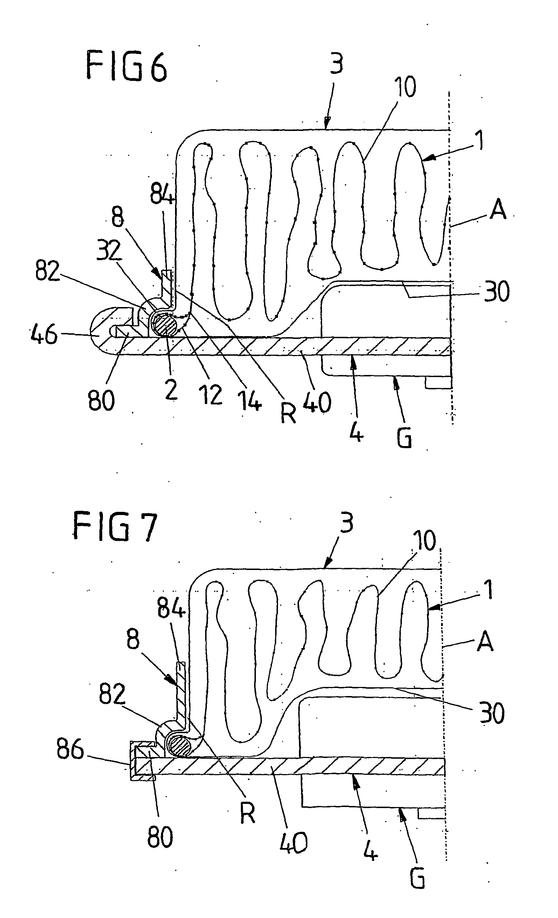

Bei dem in Fig. 6 dargestellten Ausführungsbeispiel einer Modulbaugruppe weist der Träger 4 am äußeren Rand eine Umbördelung 46 auf, die einen abgewinkelten Endabschnitt 80 (Befestigungsabschnitt) eines vom Grundkörper 40 des Trägers 4 abstehenden Gehäuseteiles 8 aufnimmt. Dieses weist weiterhin einen Aufnahmeabschnitt 82 auf, in dem der Haltering 2 zusammen mit der Schlaufe 12 des Gassackpaketes sowie dem entsprechenden Abschnitt 32 der Schutzhülle 30 formschlüssig aufgenommen ist, wobei der Haltering 2 vorteilhaft in radialer Richtung nach außen in Richtung auf den Aufnahmeabschnitt 82 elastisch vorgespannt ist. An den Aufnahmeabschnitt 82 des Gehäuseteiles 8 schließt sich ein Endabschnitt 84 an, mit dem das Gehäuseteil 8 das Gassackpaket 1 ringförmig umschließt.

Die Umbördelung 46 am äußeren Rand des Trägers 4, die den Befestigungsabschnitt des Gehäuseteiles 8 umgreift, wird bevorzugt erst gebildet, nachdem zunächst das Gassackpaket 1 und der Haltering 2 und anschließend das Gehäuseteil 8 auf den Träger aufgesetzt und hierauf derart positioniert worden sind, dass der Haltering 2 von dem Aufnahmeabschnitt 82 des Gehäuseteiles 8 übergriffen bzw. zumindest teilweise umfasst wird. Das Gehäuseteil 8 ist dabei derart auszurichten, dass dessen Befestigungsabschnitt 80 entlang des Randes des Trägers 4 verläuft. Sodann wird durch Umbördeln des Randes 46 des Trägers 4 das Gehäuseteil 8 am Träger 4 fixiert und gleichzeitig der Haltering 2 mittels des Aufnahmeabschnittes 82 des Gehäuseteiles 8 ebenfalls am Träger 4 festgelegt.

Eine weitere Besonderheit des in Fig. 6 dargestellten Ausführungsbeispieles besteht darin, dass der Träger 4 nach Art eines Generatorflansches einstückig am Gasgenerator G angeformt ist. Der Gasgenerator G und der Träger 4 bilden demnach eine einstückig geformte Baugruppe.

Fig. 7 zeigt eine Abwandlung des Ausführungsbeispieles aus Fig. 6, wobei der Unterschied darin besteht, dass zur Verbindung des Gehäuseteiles 8 mit dem Träger 4 anstelle einer Umbördelung 46 des Trägers 4 eine separate Klemmeinrichtung 86, z.B. der in den Figuren 5a und 5b dargestellten Art, verwendet wird. Die Klemmeinrichtung 86 steht zur Festlegung des Gehäuseteiles 8 am Träger 4 entweder unter elastischer Vorspannung oder sie ist hierfür plastisch deformierbar.

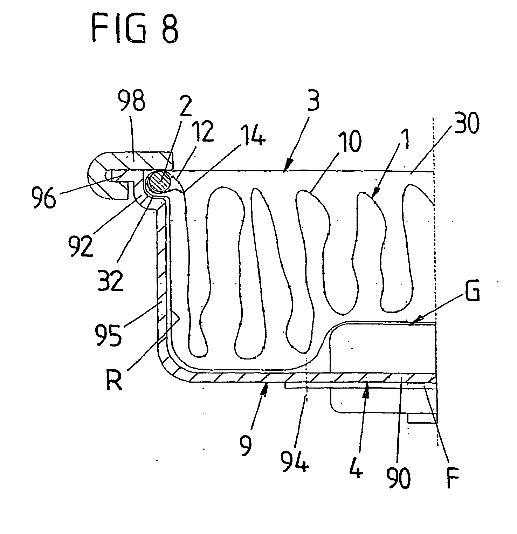

Fig. 8 zeigt schließlich ein Ausführungsbeispiel einer Modulbaugruppe, bei dem der Generatorträger 4 einstückig in ein das Gassackpaket 1 aufnehmendes, topfförmiges Gehäuseunterteil 9 integriert ist und dabei durch die Bodenfläche 90 des Gehäuseunterteiles 9 gebildet wird. Daran ist der Gasgenerator G über seinen Generatorflansch F durch geeignete Verbindungsmittel 94 befestigt.

An der das Gassackpaket 1 ringartig umschließenden, von der Bodenfläche 90 (im Wesentlichen senkrecht) abstehenden äußeren, seitlichen Gehäusewand 95 ist im Bereich des oberen, der Bodenfläche 90 abgewandten Endes eine Ausnehmung 92 ausgeformt, in der der Haltering 2 zusammen mit der Schlaufe 12 des Gassackpaketes 1 sowie dem entsprechenden Abschnitt 32 der Schutzhülle 3 aufgenommen ist.

Dabei wird der Haltering 2 zusätzlich von einem Abdeckelement 98 begrenzt, das zusammen mit der Rastausnehmung 92 eine U-förmige Aufnahme für den Haltering 2 bildet und das an einem seitlich abstehenden, einen Befestigungsflansch bildenden Endabschnitt 96 des Gehäuseunterteiles 9 durch Umbördeln festgelegt ist.

Ein Unterschied zwischen dem in Fig. 8 dargestellten Ausführungsbeispiel und den anhand der Figuren 1 bis 7 dargestellten Modulbaugruppen besteht darin, dass gemäß Fig. 8 die Mittel 2, 92, 98 zur Festlegung des Gassackpaketes 1 an dem durch das Gehäuse 9 gebildeten Träger auf der dem Gasgenerator G beabstandeten Oberseite des Gassackpakets 1 vorgesehen sind, während bei den in den Figuren 1 bis 7 dargestellten Modulbaugruppen die Mittel zur Festlegung des Gassackpaketes 1 am jeweiligen Träger am unteren, dem Gasgenerator G zugewandten Ende des Gassackpaketes 1 angreifen.

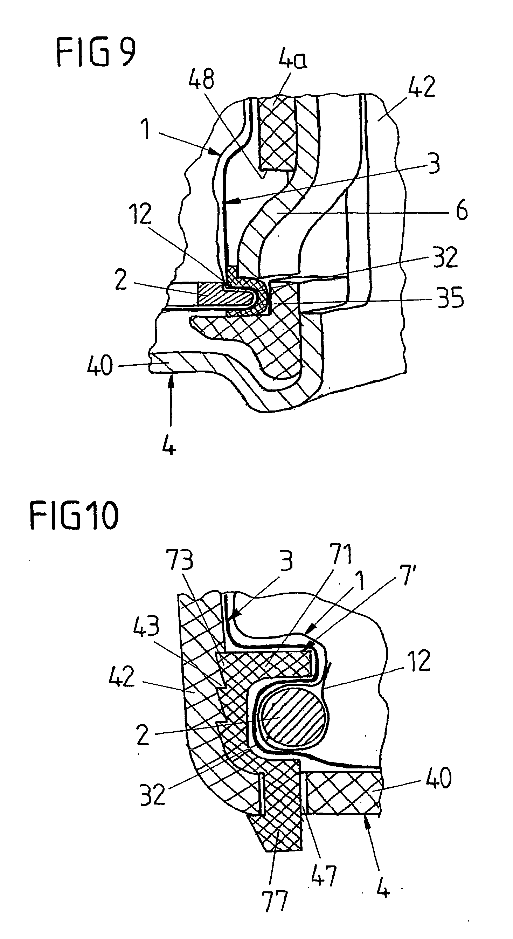

Figur 9 zeigt ausschnitthaft eine Weiterbildung des Ausführungsbeispieles aus Figur 3, und zwar im Bereich eines von einem Clipselement 6 als Befestigungsmittel übergriffenen Halteringes 2, die zwischen sich eine um den Haltering 2 gelegte Schlaufe 12 des Gassackpaketes 1 sowie einen die Schlaufe 12 überdeckenden Hüllenabschnitt 32 aufnehmen. Um hierbei das Material des Gassackpaketes 1 sowie der Schutzhülle 3 vor Beschädigung insbesondere durch das Clipselement 6 zu schützen, ist zwischen dem Clipselement 6 einerseits und der Schlaufe 12 des Gassackpaketes 1 sowie dem zugeordneten Hüllenabschnitt 32 andererseits eine Abdeckung 35 in Form eines Schrumpfschlauches angeordnet, welche an die äußere Kontur des Halteringes 2 angepasst ist und die Schlaufe 12 des Gassackpaketes 1 sowie den die Schlaufe 12 umgebenden Hüllenabschnitt 32 abdeckt.

Anhand Figur 9 ist ferner zusätzlich zu dem Träger 4 der Modulbaugruppe eine Modulabdeckung 4a dargestellt, die eine Öffnung 48 aufweist, durch die hindurch das einstückig am Träger 4 angeformte Clipselement 6 zu dem von der Modulabdeckung 4a aufgenommenen Haltering 2 ragt.

Figur 10 zeigt ausschnitthaft eine weitere Möglichkeit zur Fixierung von Befestigungsmitteln 7', welche eine Schlaufe 12 des Gassackpaketes 1 sowie einen zugeordneten Hüllenabschnitt 32 am Haltering 2 mit einem Befestigungsabschnitt 71 übergreifen, an dem Träger 4 der Modulbaugruppe. Die Rastmittel umfassen am Befestigungsmittel 7' ein erstes Rastelement 73 in Form einer Sägezahnkontur sowie ein zweites Rastelement 77 in Form eines Rasthakens. Letzterem ist am Grundkörper 40 des Trägers 4 eine Rastöffnung 47 und ersterem am abgewinkelten Abschnitt 42 des Trägers 4 eine angepasste Sägezahnkontur 43 zugeordnet. Dies ermöglicht eine dauerhafte, sichere Fixierung der Befestigungsmittel 7' am Träger 4 des Modulgehäuses an zwei voneinander beabstandeten Raststellen 43, 73 einerseits und 47, 77 andererseits, wobei die beiden Raststellen 43, 73; 47, 77 an zueinander abgewinkelten Abschnitten 40, 42 des Trägers 4 liegen.

## Patentansprüche

1. Modulbaugruppe für eine Airbageinrichtung zum Schutz von Insassen in Kraftfahrzeugen, mit
- einem Gassackpaket (1), das zum Schutz eines Fahrzeuginsassen aufblasbar ist,
- einer gasdicht verschlossenen, flexiblen Schutzhülle (3), in der das Gassackpaket (1) aufgenommen ist,
- einem Träger (4, 9) der Modulbaugruppe, an dem das Gassackpaket (1) festgelegt ist, und
- Mitteln zur Festlegung des Gassackpaketes (1) am Träger (4, 9), die ein sich entlang eines Randes (R) des Gassackpaketes (1) erstreckendes und mit dem Gassackpaket (1) verbundenes Halteelement (2) umfassen,
**dadurch gekennzeichnet,**
**dass** das Halteelement (2) zur Festlegung des Gassackpaketes (1) am Träger (4, 9) von am Träger (4, 9) vorgesehenen Befestigungsmitteln (5, 5', 6, 6', 7, 7', 82, 98) übergriffen wird, die vollständig außerhalb des Gassackpaketes (1) sowie der das Gassackpaket (1) umschließenden Schutzhülle (3) liegen, und das die Befestigungsmittel (6, 6') einstückig am Träger (4) angeformt und federnd gegenüber einem seitlichen Abschnitt des Trägers (4) schwenkbar sind oder die Befestigungsmittel (5, 5', 7, 7', 82, 98) als separate Baugruppe am Träger (4, 9) fixiert sind.

2. Modulbaugruppe nach Anspruch 1, **dadurch gekennzeichnet, dass** das Halteelement (2) in einer Schlaufe (12) des Gassackpaketes (1) angeordnet ist.

3. Modulbaugruppe nach Anspruch 2, **dadurch gekennzeichnet, dass** die Schlaufe (12) das Halteelement (2) im Querschnitt vollständig umschließt.

4. Modulbaugruppe nach Anspruch 3, **dadurch gekennzeichnet, dass** die geschlossene Schlaufe (12) gebildet ist durch Verbindung zweier Gassackabschnitte des Gassackpaketes (1).

5. Modulbaugruppe nach einem der vorhergehenden Ansprüche, **dadurch gekennzeichnet, dass** das Halteelement (2) durch einen Haltering gebildet wird, der ringförmig an einem Rand (R) des Gassackpaketes (1) umläuft.

6. Modulbaugruppe nach Anspruch 5, **dadurch gekennzeichnet, dass** das Halteelement (2) als ununterbrochener Haltering am Rand (R) des Gassackpaketes (1) umläuft.

7. Modulbaugruppe nach Anspruch 5, **dadurch gekennzeichnet, dass** der Haltering (2) durch eine Mehrzahl hintereinander angeordneter, voneinander beabstandeter Ringabschnitte gebildet wird.

8. Modulbaugruppe nach einem der Ansprüche 1 bis 4, **dadurch gekennzeichnet, dass** das Halteelement (2) durch eine Halteplatte gebildet wird.

9. Modulbaugruppe nach einem der vorhergehenden Ansprüche, **dadurch gekennzeichnet, dass** das Halteelement (2) elastisch in eine Position vorgespannt ist, in der es von den Befestigungsmitteln (5, 5', 6, 6', 7, 7', 82, 92, 98) übergriffen wird.

10. Modulbaugruppe nach einem der vorhergehenden Ansprüche, **dadurch gekennzeichnet, dass** das Halteelement (2) von einem Abschnitt (32) der Schutzhülle (3) umgeben ist.

11. Modulbaugruppe nach Anspruch 2 und 10, **dadurch gekennzeichnet, dass** der Abschnitt (32) der Schutzhülle (3) die Schlaufe (12) des Gassackpaketes (1) umschließt.

12. Modulbaugruppe nach einem der vorhergehenden Ansprüche, **dadurch gekennzeichnet, dass** die Befestigungsmittel (5, 5', 6, 6', 7, 7', 82, 92, 98) das Halteelement (2) umgreifen.

13. Modulbaugruppe nach Anspruch 12, **dadurch gekennzeichnet, dass** die Befestigungsmittel (5, 5' 6, 6', 7, 7', 82, 92, 98) zusammen mit dem Träger (4, 9) das Halteelement (2) umgreifen.

14. Modulbaugruppe nach einem der vorhergehenden Ansprüche, **dadurch gekennzeichnet, dass** die Befestigungsmittel (5, 5') mittels einer Schraub- oder Nietverbindung (45) am Träger (4) fixiert sind.

15. Modulbaugruppe nach einem der Ansprüche 1 bis 13, **dadurch gekennzeichnet, dass** die Befestigungsmittel (82) mittels einer Klemmeinrichtung (86) am Träger (4) fixiert sind.

16. Modulbaugruppe nach einem der Ansprüche 1 bis 13, **dadurch gekennzeichnet, dass** die Befestigungsmittel (82) durch eine Materialumstellung (46), insbesondere in Form einer Umbördelung, des Trägers (4) am Träger (4) fixiert sind.

17. Modulbaugruppe nach einem der Ansprüche 14 bis 16, **dadurch gekennzeichnet, dass** die separate Baugruppe (5, 5') durch eine Mehrzahl hakenförmiger Befestigungselemente gebildet wird, die das Halteelement (2) übergreifen.

18. Modulbaugruppe nach einem der Ansprüche 14 bis 16, **dadurch gekennzeichnet, dass** die separate Baugruppe (8) durch ein Gehäuseteil gebildet wird, an dem die Befestigungsmittel (82) vorgesehen sind.

19. Modulbaugruppe nach einem der Ansprüche 1 bis 13, **dadurch gekennzeichnet, dass** die separate Baugruppe durch eine Klemmeinrichtung (7) gebildet wird, die das Halteelement (2) klemmend an dem Träger (4) festgelegt.

20. Modulbaugruppe nach einem der Ansprüche 1 bis 13, **dadurch gekennzeichnet, dass** die Befestigungsmittel (7') durch Rastmittel (43, 47, 73, 77) am Träger (4) fixiert sind.

21. Modulbaugruppe nach Anspruch 20, **dadurch gekennzeichnet, dass** die Befestigungsmittel (7') durch die Rastmittel (43, 47, 73, 77) an mindestens zwei voneinander beabstandeten Raststellen am Träger (4) fixiert sind.

22. Modulbaugruppe nach einem der Ansprüche 1 bis 13, **dadurch gekennzeichnet, dass** die Befestigungsmittel (6, 6') durch Clipselemente oder Rastvorsprünge gebildet werden.

23. Modulbaugruppe nach einem der Ansprüche 1 bis 13 oder 22, **dadurch gekennzeichnet, dass** die Befestigungsmittel (6') erst nach dem Anordnen des Gassackpaketes (1) und des Halteelementes (2) auf dem Träger (4, 9) geformt sind.

24. Modulbaugruppe nach einem der vorhergehenden Ansprüche, **dadurch gekennzeichnet, dass** die Befestigungsmittel (5, 5', 6, 6', 7, 7', 82, 92) das Halteelement (2) formschlüssig halten.

25. Modulbaugruppe nach einem der vorhergehenden Ansprüche, **dadurch gekennzeichnet, dass** die Befestigungsmittel (5, 5', 6, 6', 7, 7', 82, 92) das Halteelement (2) kraftschlüssig halten.

26. Modulbaugruppe nach einem der vorhergehenden Ansprüche, **dadurch gekennzeichnet, dass** die Befestigungsmittel (5, 5', 6', 82, 92) sich ohne Unterbrechung entlang des äußeren Randes (R) des Gassackpaketes (1) und entlang des Halteringes (2) erstrecken.

27. Modulbaugruppe nach einem der Ansprüche 1 bis 25, **dadurch gekennzeichnet, dass** die Befestigungsmittel (5, 5', 6, 6', 7, 7', 82, 92) durch eine Mehrzahl hintereinander angeordneter Befestigungselemente gebildet werden.

28. Modulbaugruppe nach einem der vorhergehenden Ansprüche, **dadurch gekennzeichnet, dass** zwischen dem Halteelement (2) und den Befestigungsmitteln (5, 5', 6, 6', 7, 7', 82, 92, 98) ein Abdeckelement (35) angeordnet ist, das zur Überdeckung des Randes R des Gassackpaketes (1) und/oder der flexiblen Schutzhülle (3) dient.

29. Modulbaugruppe nach Anspruch 28, **dadurch gekennzeichnet, dass** die Abdeckung (35) durch einen Schrumpfschlauch gebildet wird.

30. Modulbaugruppe nach einem der vorhergehenden Ansprüche, **dadurch gekennzeichnet, dass** der Träger (4) als ein Generatorträger ausgebildet ist.

31. Modulbaugruppe nach Anspruch 30, **dadurch gekennzeichnet, dass** der Träger (4) einstückig am Gasgenerator (G) angeformt ist.

32. Modulbaugruppe nach einem der Ansprüche 1 bis 30, **dadurch gekennzeichnet, dass** der Träger (4, 9) einen Teil eines Gehäuses zur Aufnahme des Gassackpaketes (1) bildet.

33. Modulbaugruppe nach Anspruch 32, **dadurch gekennzeichnet, dass** in den als Gehäuseteil ausgebildeten Träger (9) ein Generatorträger (4) integriert ist.

## Claims

1. Module assembly for an airbag device for protecting occupants of motor vehicles, having
- an airbag packet (1) which can be inflated to protect a vehicle occupant,
- a flexible protective envelope (3) which is closed off in a gastight manner and in which the airbag packet (1) is accommodated,
- a carrier (4, 9) of the module assembly, to which the airbag packet (1) is fixed, and
- means for fixing the airbag packet (1) to the carrier (4, 9), which comprise a holding-element (2) extending alongside of a boundary (R) of the airbag packet (1) and being connected to the airbag packet (1),
**characterized**
**in that** securing means (5, 5', 6, 6', 7, 7', 82, 98) are provided on the carrier (4, 9) engaging over the holding element (2) to fix the airbag packet (1) to the carrier (4, 9) and being located totally outside of the airbag packet (1) and of the protective envelope (3) enclosing the airbag packet (1), and that the securing means (6, 6') are formed integrally on the carrier (4) and are resiliently pivotable with respect to a lateral section of the carrier (4) or the securing means (5, 5', 7, 7', 82, 98) being fixed on the carrier (4, 9) as a separate assembly.

2. Module assembly according to Claim 1, **characterized in that** the holding element (2) is arranged in a loop (12) of the airbag packet (1).

3. Module assembly according to Claim 2, **characterized in that** the loop (12) completely encloses the holding element (2) in cross section.

4. Module assembly according to Claim 3, **characterized in that** the closed loop (12) is formed by joining two airbag sections of the airbag packet (1).

5. Module assembly according to one of the preceding claims, **characterized in that** the holding element (2) is formed by a holding ring which runs in the shape of a ring around an edge (R) of the airbag packet (1).

6. Module assembly according to Claim 5, **characterized in that** the holding element (2) runs as an uninterrupted holding ring around the edge (R) of the airbag packet (1).

7. Module assembly according to Claim 5, **characterized in that** the holding ring (2) is formed by a plurality of ring sections which are arranged in succession and are spaced apart from one another.

8. Module assembly according to one of Claims 1 to 4, **characterized in that** the holding element (2) is formed by a holding plate.

9. Module assembly according to one of the preceding claims, **characterized in that** the holding element (2) is elastically preloaded into a position in which the securing means (5, 5', 6, 6', 7, 7', 82, 92, 98) engage over it.

10. Module assembly according to one of the preceding claims, **characterized in that** the holding element (2) is surrounded by a section (32) of the protective envelope (3).

11. Module assembly according to Claims 2 and 10, **characterized in that** the section (32) of the protective envelope (3) encloses the loop (12) of the airbag packet (1).

12. Module assembly according to one of the preceding claims, **characterized in that** the securing means (5, 5', 6, 6', 7, 7', 82, 92, 98) engage around the holding element (2).

13. Module assembly according to Claim 12, **characterized in that** the securing means (5, 5', 6, 6', 7, 7', 82, 92, 98) together with the carrier (4, 9) engage around the holding element (2).

14. Module assembly according to one of the preceding claims, **characterized in that** the securing means (5, 5') are fixed to the carrier (4) by means of a screw or rivet connection (45).

15. Module assembly according to one of Claims 1 to 13, **characterized in that** the securing means (82) are fixed to the carrier (4) by means of a clamping device (86).

16. Module assembly according to one of Claims 1 to 13, **characterized in that** the securing means (82) are fixed to the carrier (4) by a material rearrangement (46), in particular in the form of an overturned flange, of the carrier (4).

17. Module assembly according to one of Claims 14 to 16, **characterized in that** the separate assembly (5, 5') is formed by a plurality of hook-shaped securing elements which engage over the holding element (2).

18. Module assembly according to one of Claims 14 to 16, **characterized in that** the separate assembly (8) is formed by a housing part on which the securing means (82) are provided.

19. Module assembly according to one of Claims 1 to 13, **characterized in that** the separate assembly is formed by a clamping device (7) which fixes the holding element (2) clamped to the carrier (4).

20. Module assembly according to one of Claims 1 to 13, **characterized in that** the securing means (7') are fixed to the carrier (4) by latching means (43, 47, 73, 77).

21. Module assembly according to Claim 20, **characterized in that** the securing means (7') are fixed to the carrier (4) by the latching means (43, 47, 73, 77) at at least two latching points spaced apart from one another.

22. Module assembly according to one of Claims 1 to 13, **characterized in that** the securing elements (6, 6') are formed by clip elements or latching projections.

23. Module assembly according to one of Claims 1 to 13 or 22, **characterized in that** the securing means (6') are formed on the carrier (4, 9) only after the airbag packet (1) and the holding element (2) have been put in place.

24. Module assembly according to one of the preceding claims, **characterized in that** the securing means (5, 5', 6, 6', 7, 7', 82, 92) hold the holding element (2) in a positively locking manner.

25. Module assembly according to one of the preceding claims, **characterized in that** the securing means (5, 5', 6, 6', 7, 7', 82, 92) hold the holding element (2) in a nonpositively locking manner.

26. Module assembly according to one of the preceding claims, **characterized in that** the securing means (5, 5', 6', 82, 92) extend along the outer edge (R) of the airbag packet (1) and along the holding ring (2) without interruption.

27. Module assembly according to one of Claims 1 to 25, **characterized in that** the securing means (5, 5', 6, 6', 7, 7', 82, 92) are formed by a plurality of securing elements arranged in succession.

28. Module assembly according to one of the preceding claims, **characterized in that** a covering element (35), which serves to cover over the edge R of the airbag packet (1) and/or the flexible protective envelope (3), is arranged between the holding element (2) and the securing means (5, 5', 6, 6', 7, 7', 82, 92, 98).

29. Module assembly according to Claim 28, **characterized in that** the cover (35) is formed by a flexible shrink-fit tube.

30. Module assembly according to one of the preceding claims, **characterized in that** the carrier (4) is designed as a generator carrier.

31. Module assembly according to Claim 30, **characterized in that** the carrier (4) is formed integrally on the gas generator (G).

32. Module assembly according to one of Claims 1 to 30, **characterized in that** the carrier (4, 9) forms part of a housing for accommodating the airbag packet (1).

33. Module assembly according to Claim 32, **characterized in that** a generator carrier (4) is integrated in the carrier (9) designed as a housing part.

## Revendications

1. Groupe structurel modulaire pour un système à coussin gonflable destiné à la protection de passagers dans des véhicules automobiles, comprenant :
- un paquet de sac gonflable (1), susceptible d'être gonflé pour la protection d'un passager du véhicule,
- une enveloppe protectrice flexible (3) refermée de façon étanche aux gaz, dans laquelle est logé le paquet de sac gonflable (1),
- un support (4, 9) du groupe structurel modulaire, sur lequel est immobilisé le paquet de sac gonflable (1), et
- des moyens pour immobiliser le paquet de sac gonflable (1) sur le support (4, 9), qui comprennent un élément de retenue (2) s'étendant le long d'une bordure (R) du paquet de sac gonflable (1) et étant relié au paquet de sac gonflable (1),
**caractérisé en ce que**
l'élément de retenue (2), afin d'immobiliser le paquet de sac gonflable (1) sur le support (4, 9), est coiffé par des moyens de fixation (5, 5', 6, 6', 7, 7', 82, 98) prévus sur le support (4, 9), qui sont situés entièrement à l'extérieur du paquet de sac gonflable (1) ainsi que de l'enveloppe protectrice (3) qui enferme le paquet de sac gonflable (1), et **en ce que** les moyens de fixation (6, 6') sont conformés d'une seule pièce sur le support (4) et capables de pivoter avec effet élastique par rapport à un tronçon latéral du support (4) ou **en ce que** les moyens de fixation (5, 5', 7, 7', 82, 98) sont fixés sur le support (4, 9) comme un groupe structurel séparé.

2. Groupe structurel modulaire selon la revendication 1, **caractérisé en ce que** l'élément de retenue (2) est agencé dans une boucle (12) du paquet de sac gonflable (1).

3. Groupe structurel modulaire selon la revendication 2, **caractérisé en ce que** la boucle (12) enferme complètement l'élément de retenue (2) en section transversale.

4. Groupe structurel modulaire selon la revendication 3, **caractérisé en ce que** la boucle fermée (12) est formée par la liaison de deux tronçons du paquet de sac gonflable (1).

5. Groupe structurel modulaire selon l'une des revendications précédentes, **caractérisé en ce que** l'élément de retenue (2) est formé par une bague de retenue qui s'étend sous forme annulaire sur le pourtour d'une bordure (R) du paquet de sac gonflable (1).

6. Groupe structurel modulaire selon la revendication 5, **caractérisé en ce que** l'élément de retenue (2) s'étend, sous forme d'une bague de retenue ininterrompue, sur le pourtour de la bordure (R) du paquet de sac gonflable (1).

7. Groupe structurel modulaire selon la revendication 5, **caractérisé en ce que** la bague de retenue (2) est formée par une pluralité de tronçons de bague agencés les uns derrière les autres et écartés les uns des autres.

8. Groupe structurel modulaire selon l'une des revendications 1 à 4, **caractérisé en ce que** l'élément de retenue (2) est formé par une plaque de retenue.

9. Groupe structurel modulaire selon l'une des revendications précédentes, **caractérisé en ce que** l'élément de retenue (2) est précontraint élastiquement dans une position dans laquelle il est coiffé par les moyens de fixation (5, 5', 6, 6', 7, 7', 82, 92, 98).

10. Groupe structurel modulaire selon l'une des revendications précédentes, **caractérisé en ce que** l'élément de retenue (2) est entouré par un tronçon (32) de l'enveloppe protectrice (3).

11. Groupe structurel modulaire selon les revendications 2 et 10, **caractérisé en ce que** le tronçon (32) de l'enveloppe protectrice (3) enferme la boucle (12) du paquet de sac gonflable (1).

12. Groupe structurel modulaire selon l'une des revendications précédentes, **caractérisé en ce que** les moyens de fixation (5, 5', 6, 6', 7, 7', 82, 92, 98) entourent l'élément de retenue (2).

13. Groupe structurel modulaire selon la revendication 12, **caractérisé en ce que** les moyens de fixation (5, 5', 6, 6', 7, 7', 82, 92, 98) entourent l'élément de retenue (2) conjointement avec le support (4, 9).

14. Groupe structurel modulaire selon l'une des revendications précédentes, **caractérisé en ce que** les moyens de fixation (5, 5') sont fixés sur le support (4) au moyen d'une liaison à vis ou d'une liaison à rivet (45).

15. Groupe structurel modulaire selon l'une des revendications 1 à 13, **caractérisé en ce que** les moyens de fixation (82) sont fixés sur le support (4) au moyen d'un système de serrage (86).

16. Groupe structurel modulaire selon l'une des revendications 1 à 13, **caractérisé en ce que** les moyens de fixation (82) sont fixés sur le support (4) par une déformation du matériau (46), en particulier sous la forme d'un rabattement, du support (4).

17. Groupe structurel modulaire selon l'une des revendications 14 à 16, **caractérisé en ce que** le groupe structurel séparé (5, 5') est formé par une pluralité d'éléments de fixation en forme de crochets, qui coiffent l'élément de retenue (2).

18. Groupe structurel modulaire selon l'une des revendications 14 à 16, **caractérisé en ce que** le groupe structurel séparé (8) est formé par une partie de boîtier sur laquelle sont prévus les moyens de fixation (82).

19. Groupe structurel modulaire selon l'une des revendications 1 à 13, **caractérisé en ce que** le groupe structurel séparé est formé par un système de serrage (7) qui immobilise l'élément de retenue (2) par serrage contre le support (4).

20. Groupe structurel modulaire selon l'une des revendications 1 à 13, **caractérisé en ce que** les moyens de fixation (7') sont fixés sur le support (4) par des moyens à enclenchement (43, 47, 73, 77).

21. Groupe structurel modulaire selon la revendication 20, **caractérisé en ce que** les moyens de fixation (7') sont fixés sur le support (4) par les moyens à enclenchement (43, 47, 73, 77) en au moins deux emplacements d'enclenchement écartés l'un de l'autre.

22. Groupe structurel modulaire selon l'une des revendications 1 à 13, **caractérisé en ce que** les moyens de fixation (6, 6') sont formés par des éléments à clipser ou des saillies d'enclenchement.

23. Groupe structurel modulaire selon l'une des revendications 1 à 13 ou 22, **caractérisé en ce que** les moyens de fixation (6') sont conformés uniquement après avoir agencé le paquet de sac gonflable (1) et l'élément de retenue (2) sur le support (4, 9).

24. Groupe structurel modulaire selon l'une des revendications précédentes, **caractérisé en ce que** les moyens de fixation (5, 5', 6, 6', 7, 7', 82, 92) retiennent l'élément de retenue (2) par coopération de formes.

25. Groupe structurel modulaire selon l'une des revendications précédentes, **caractérisé en ce que** les moyens de fixation (5, 5', 6, 6', 7, 7', 82, 92) retiennent l'élément de retenue (2) par coopération de forces.

26. Groupe structurel modulaire selon l'une des revendications précédentes, **caractérisé en ce que** les moyens de fixation (5, 5', 6', 82, 92) s'étendent sans interruption le long de la bordure extérieure (R) du paquet de sac gonflable (1) et le long de la bague de retenue (2).

27. Groupe structurel modulaire selon l'une des revendications 1 à 25, **caractérisé en ce que** les moyens de fixation (5, 5', 6, 6', 7, 7', 82, 92) sont formés par une pluralité d'éléments de fixation agencés les uns derrière les autres.

28. Groupe structurel modulaire selon l'une des revendications précédentes, **caractérisé en ce qu'**un élément de couverture (35) est agencé entre l'élément de retenue (2) et les moyens de fixation (5, 5', 6, 6', 7, 7', 82, 92, 98), celui-ci servant à recouvrir la bordure (R) du paquet de sac gonflable (1) et/ou de l'enveloppe protectrice flexible (3).

29. Groupe structurel modulaire selon la revendication 28, **caractérisé en ce que** l'élément de couverture (35) est formé par une gaine rétractable.

30. Groupe structurel modulaire selon l'une des revendications précédentes, **caractérisé en ce que** le support (4) est réalisé sous forme de support de générateur.

31. Groupe structurel modulaire selon la revendication 30, **caractérisé en ce que** le support (4) est conformé d'une seule pièce sur le générateur de gaz (G).

32. Groupe structurel modulaire selon l'une des revendications 1 à 30, **caractérisé en ce que** le support (4, 9) forme une partie d'un boîtier pour la réception du paquet de sac gonflable (1).

33. Groupe structurel modulaire selon la revendication 32, **caractérisé en ce qu'**un support de générateur (4) est intégré dans le support réalisé sous forme de partie de boîtier.
